# EUROPÄISCHE PATENTSCHRIFT

(11) **EP 0 429 757 B1**
(45) Veröffentlichungstag und Bekanntmachung des Hinweises auf die Patenterteilung: **21.04.1993**
(21) Anmeldenummer: 90114524.3
(22) Anmeldetag: 28.07.1990
(51) Int. Cl.: B62D 33/06, F16F 1/38

(54) **Gelenkverbindung zwischen dem Kippzylinder und dem kippbaren Fahrerhaus eines Lastkraftwagens**
Pivotal connection between the tilt cylinder and the tilt cab of a lorry
Joint articulé entre le cylindre basculant et la cabine basculante d'un camion

(30) Priorität: 27.11.1989 DE 3939192
(43) Veröffentlichungstag der Anmeldung: 05.06.1991
(73) Patentinhaber: WEBER-HYDRAULIK GmbH, D-74361 Güglingen (DE)
(72) Erfinder: Aldinger, Heinz, D-7129 Güglingen (DE)
(74) Vertreter: Säger, Manfred, Dipl.-Ing.

(56) Entgegenhaltungen:
- EP-A- 0 188 824
- DE-A- 2 220 857
- DE-U- 8 421 747
- US-A- 1 833 002

## Beschreibung

Die Erfindung betrifft eine Gelenkverbindung zwischen dem Kippzylinder bzw. dessen Kolbenstange und dem kippbaren Fahrerhaus bzw. dem Fahrzeugrahmen eines Lastkraftwagens, welche ein zylinderseitiges Verbindungsauge und einen karosserieseitigen Gelenkzapfen umfaßt, wobei sich der Gelenkzapfen mit einem radialen Bewegungsspielraum durch das Verbindungsauge erstreckt, insbesondere nach dem Oberbegriff der jeweiligen Nebenansprüche.

Bei Lastkraftwagen mit einem kippbaren Fahrerhaus wird das Fahrerhaus mit Hilfe des Kippzylinders aus einer Ruhelage, bei der es auf den Fahrzeugrahmen aufliegt, in eine Kippstellung gekippt und durch Einfahren des Kippzylinders wieder zurück in die Ruhelage bewegt.

Während des Kippvorganges lastet nahezu das gesamte Gewicht des Fahrerhaus über den Gelenkzapfen und das Verbindungsauge auf dem Kippzylinder. Hierbei werden die Kontaktflächen des Gelenkzapfens und des Verbindungauges stark belastet.

Befindet sich das Fahrerhaus in der Ruhelage und ruht dabei auf dem Fahrzeugrahmen ist der Kippzylinder weitgehend entlastet. In dieser Ruhestellung bildet der Kippzylinder zwischen dem Fahrzeugrahmen und dem Fahrerhaus lediglich eine eher störende Verbindung ,da durch ihn Rüttelbewegungen des Fahrzeugrahmens auf das Fahrerhaus übertragen werden können wobei außerdem Geräuschbelästigungen auftreten können, wenn sich der Gelenkzapfen in dem Verbindungsauge hin- und herbewegt, weil innerhalb des Verbindungsauges ein gewisser Bewegungsspielraum für den Gelenkzapfen gegeben ist.

Es ist eine Gelenkverbindung der eingangs genannten Gattung bekannt (EP-A- 0 188 824) , durch die eine gewisse Entkoppelung von Kippzylinder und Fahrerhaus bzw. Kippzylinder und Fahrzeugrahmen während der Ruhestellung des Fahrerhaus erreicht werden soll. Bei der bekannten Gelenkverbindung sind vorzugsweise zwei Dämpfungsringe in Kammern des Verbindungsauges eingelegt, so daß eine Rüttelbewegung zwischen dem Gelenkzapfen und Verbindungsauge bewegungs- und geräuschgedämpft wird. Dabei ragen bei der bekannten Gelenkverbindung die koaxialen elastischen Dämpfungsringe nur um ein bestimmtes Maß radial über die Begrenzungen des Verbindungsauges nach innen vor, damit bei einer gewissen Kompression der Dämpfungsringe eine metallische Anlage durch Anschlagen des Gelenkzapfens an der Begrenzung des Verbindungsauges erreicht wird. Dies ist notwendig, damit bei einem Kippvorgang des Fahrerhauses durch den Kippzylinder das Gewicht des Fahrerhauses auf der metallischen Anlage lastet und nicht auf den Dämpfungsringen, die diesem Gewicht nicht standhalten können. Bei der bekannten Gelenkverbindung ist demzufolge der Bewegungssppielraum des Gelenkzapfens in dem Verbindungsauge nur relativ gering und auch der elastisch dämpfende Federweg des Gelenkzapfens in dem Verbindungsauge ist nur relativ klein. Bei größeren Rüttelbewegungen des Fahrzeuges trifft somit bei der bekannten Gelenkverbindung wieder Metall auf Metall. Bei größeren Rüttelbewegungen des Fahrzeuges treten also weiterhin die entsprechenden Probleme auf.

Eine bessere Entkoppelung des Kippzylinders von dem Fahrerhaus bzw. dem Fahrzeugrahmen wird erreicht, je größer der radiale Bewegungsspielraum des Gelenkzapfens in dem Verbindungsauge ist. Wird die lichte Weite des Verbindungsauges so groß gewählt, daß selbst bei größten Rüttelbewegungen des Fahrzeuges der Gelenkzapfen und die Begrenzungen des Verbindungsauges nicht aneinanderstoßen, so werden die Rüttelbewegungen nicht über den Kippzylinder auf das Fahrerhaus übertragen. Eventuell auftretende Geräusche könnten in einfacher und beliebiger Weise unterdrückt werden. Dämpfungsringe nach Art der vorgenannten Patentschrift sind dabei nicht unbedingt notwendig.

Bei einem größeren Bewegungsspielraum zwischen Gelenkzapfen und Verbindungsauge tritt jedoch ein anderes Problem auf. Wird nämlich bei einem Kippvorgang des Fahrerhauses durch den Kippzylinder das Fahrerhaus über seinen Totpunkt gekippt, so wird der Kippzylinder plötzlich nicht mehr druck-, sondern zugbelastet. Je größer der Bewegungsspielraum zwischen Gelenkzapfen und Verbindungsauge dann ist, desto größer ist der Druck bzw. Schlag, der dabei auftritt. Es treten somit Kraftspitzen auf, die aufgefangen werden müssen.

Der Erfindung liegt daher die Aufgabe zugrunde, eine Gelenkverbindung der eingangs genannten Gattung dahingehend zu verbessern, daß auftretende Anschlagkräfte beim Kippen des Fahrerhaus durch seine Totpunktlage gedämpft werden.

Die Aufgabe wird erfindungsgemäß durch die kennzeichnenden Merkmale des Anspruchs 1 gelöst.

Durch die elastische Halterung des Gelenkzapfens wird mit Vorteil erfindungsgemäß eine Stoßdämpfung erreicht, die die Anschlagkräfte beim Kippen des Fahrerhauses auffängt und dämpft. Der oder die Anschläge begrenzen den elastischen Weg des Gelenkzapfens, so daß bei dem normalen Kippvorgang letztendlich immer eine stabile Anlage zwischen Gelenkzapfen und Verbindungsauge erreicht wird, ohne daß die elastische Halterung die gesamten Gewichtskräfte des Fahrerhauses aufnehmen muß und dabei eventuell überdehnt oder zerstört wird. Die elastische Halterung des Gelenkzapfens wird druck- und/oder zugbelastet, aber nur bis zu einem gewissen Grad, nämlich nur soweit es der Anschlagweg erlaubt.

Der Anschlag ist vorzugsweise metallisch ausgebildet, so daß nach einem gewissen elastischen Federweg wieder eine Anlage von Metall auf Metall erreicht wird, die die auftretenden Gewichtskräfte des Fahrerhauses aufnehmen kann.

Der Gelenkzapfen ist vorzugsweise ein Bolzen, der in einer karosserieseitigen Halterung elastisch gelagert ist. Dabei sieht eine bevorzugte Ausbildung der Erfindung vor, daß die Halterung gabelförmig ausgebildet ist und Lageraufnahmen für die Bolzenenden aufweist und daß in den Lageraufnahmen Lagerbuchsen aus elastischem Werkstoff angeordnet sind.

Mit der erfindungsgemäß ausgebildeten Gelenkverbindung wird nicht nur erreicht, daß Kraftspitzen beim Kippen des Fahrerhauses über die Totpunktlage aufgefangen und stoßgedämpft werden, sondern bei der erfindungsgemäßen Gelenkverbindung kann die elastische Halterung des Gelenkzapfens mit Vorteil auch eine Entkopplungsfunktion von Kippzylinder und Fahrerhaus bzw. Fahrzeugrahmen übernehmen, wenn sich das Fahrerhaus in der Ruhelage befindet. Besonders wenn Lagerbuchsen für die elastische Lagerung verwendet werden, die aus weichem, elastischem Material gefertigt sind und großvolumig ausgebildet sind, wird mit der elastischen Halterung mit Vorteil zusätzlich auch eine Geräuschdämpfung bzw. Geräuschminderung erreicht. Die erfindungsgemäße Gelenkverbindung wirkt sich somit auch in bezug auf Rüttelbewegungen des Fahrzeugs beim Fahren vorteilhaft aus.

Der den Federweg des Gelenkzapfens begrenzende Anschlag ist vorzugsweise so ausgebildet, daß er den Gelenkzapfen in einem Abstand ringförmig umgibt, wobei er vorzugsweise mit dem Gelenkzapfen verbunden ist und mit wengistens einem korrespondierenden Anschlag der Halterung des Gelenkzapfens zusammenwirkt.

Nach einer bevorzugten Weiterbildung zeichnet sich die erfindungsgemäße Gelenkverbindung dadurch aus, daß der Bolzen an beiden Enden Anschläge aufweist, die koaxial in einem Abstand um den Bolzen umlaufende, flachringförmige Bündel sind, welche von freien Rändern radial vom Bolzen vorstehender, tellerförmiger Kragen parallel zur Mantelfläche des Bolzens hervorragen und entsprechend ausgebildete Ringanschläge, welche von der Halterung des Bolzens in Richtung auf die Kragen vorragen, in einem Abstand, aufgrund größeren Durchmessers, umgreifen, wobei durch den radialen Abstand zwischen den Ringanschlägen der Kragen und der Halterung der elastische Federweg des Bolzens allseitig festgelegt ist.

Miteinander korrespondierende Anschläge sind also vorzugsweise als konzentrische Ringe ausgebildet, von denen der kleinere Ring mit der Halterung fest zusammenhängt, während der größere Ring am Bolzen befestigt ist, und von denen der kleinere Ring innerhalb der Grenzen des größeren Ringes beweglich ist. Diese Begrenzung der Beweglichkeit des inneren Ringes begrenzt gleichzeitig die relative Beweglichkeit des Bolzens in seiner Halterung. Durch diese Begrenzung der Beweglichkeit wird eine Überbeanspruchung der Elastizität der Halterung verhindert. Vorzugsweise ist wenigstens einer dar Kragen eine lösbar am Bolzen befestigte Scheibe.

Eine bevorzugte Lösung der erfindungsgemäßen Aufgabe sieht eine erfindungsgemäße Gelenkverbindung vor, die sich auszeichnet durch wenigstens ein Reibschlußelement, an welchem das Verbindungsauge bei einer Bewegung relativ (radial) zum Gelenkzapfen gegen einen Reibungswiderstand, vorzugsweise einen Haft- und Gleitreibungswiderstand, gleitend geführt ist.

Diese alternative Lösung der gestellten Aufgabe, die mit der ersten geschilderten Lösung kombiniert wird, weist Merkmale auf, durch die eine Dämpfung der Anschlagkräfte bei einer Kippbewegung des Fahrerhauses über die Totpunktlage dadurch erreicht wird, daß die Kippbewegung des Fahrerhauses durch Reibungswiderstände gebremst wird. Die diese Reibungskräfte verursachenden Reibschlußelemente können direkt am Fahrerhaus oder am Fahrzeugrahmen angeordnet sein.

Eine bevorzugte Ausbildung der Erfindung sieht vor, daß das Reibschlußelement elastisch, vorzugsweise aus elastischem Werkstoff, ausgebildet ist und unter Preßdruck am Verbindungsauge anliegt. Dieser Preßdruck wird vorzugsweise mit einer Vorspannschraube erzeugt.

Nach einer bevorzugten Weiterbildung der Erfindung zeichnet sich die erfindungsgemäße Gelenkverbindung dadurch aus, daß beidseitig des Verbindungsauges zwei Reibschlußelemente angeordnet sind, zwischen denen das Verbindungsauge eingezwängt ist, daß die Reibschlußelemente als um den Gelenkzapfen umlaufende Ringe ausgebildet sind und daß der Gelenkzapfen ein Gewinde für eine Vorspannmutter aufweist, mit der ein Preßdruck erzeugbar ist, welcher über zwei äußere, vorzugsweise scheibenförmige Spannbacken auf die Ringe übertragen wird.

Bei einer Kombination der ersten mit der zweiten geschilderten Lösung ist eine besonders vorteilhafte Ausbildung der Gelenkverbindung möglich, bei der die als Ringe ausgebildeten Reibschlußelemente integrale Bestandteile der elastischen Lagerbuchsen für den als Bolzen ausgebildeten Gelenkzapfen sind.

Bei der erfindungsgemäßen Gelenkverbindung kann zur Vergrößerung des Bewegungsspielraums des Gelenkzapfens in Längsachsenrichtung des Zylinders das Verbindungsauge als ein sich etwa in Längsrichtung des Zylinders erstreckendes Langloch ausgebildet sein.

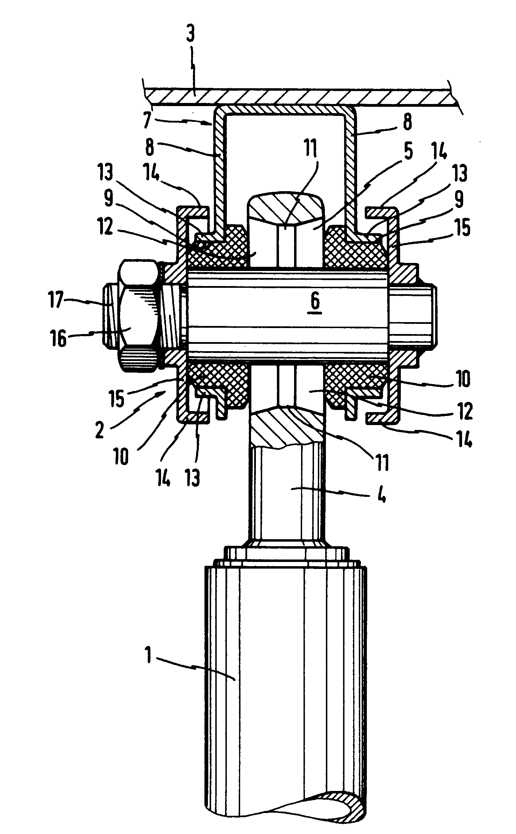

Ein Ausführungsbeispiel, aus dem sich weitere erfinderische Merkmale ergeben, ist in der Zeichnung dargestellt.

Die einzige Figur der Zeichnung zeigt das Kolbenstangenende eines Kippzylinders 1 in einer Seitenansicht, welches über eine erfindungsgemäße Gelenkverbindung 2 mit einem Karosserieelement 3, einem Fahrerhaus oder einem Fahrzeugrahmen, eines Lastkraftwagens verbunden ist. Dabei sind das Kolbenstangenende 4 und die Gelenkverbindung 2 teilweise im Längsschnitt dargestellt.

Das Kolbenstangenende 4 weist ein Verbindungsauge 5 auf, welches als sich etwa in Längsrichtung des Kippzylinders 1 erstreckendes Langloch ausgebildet ist. Durch dieses Langloch 5 ist quer ein Bolzen 6 hindurchgeführt, der über eine Halterung 7 am Karosserieelement 3 befestigt ist. Dabei bildet der Bolzen 6 den Gelenkzapfen der Gelenkverbindung 2. Die Halterung 7 ist weitgehend gabelförmig ausgebildet, so daß zwei parallele Flansche 8 vom Karosserieelement 3 vorragen. Jeder Flansch 8 weist eine Lageraufnahme 9 für den Bolzen 6 auf, die miteinander korrespondieren. In jeder der Lageraufnahmen 9 ist eine Lagerbuchse 10 für den Bolzen 6 eingepreßt, welcher aus einem elastischen Werkstoff gefertigt ist. Da der Bolzen 6 mit seinen beiden Enden in den beiden elastischen Lagerbuchsen 10 gelagert ist, ist der Bolzen 6 elastisch am Karosserieelement 3 gehaltert, so daß der Abstand des Bolzens 6 vom Karosserieteil 3 innerhalb des Langlochs (Verbindungsauges 5) veränderbar ist. Die Bereiche der elastischen Lagerbuchse 10, die sich zwischen dem Bolzen 6 und der Lageraufnahme befinden, dämpfen elastisch Krafteinwirkungen radial zum Bolzen, die auftreten können, wenn der Bolzen 6 gegen eine Endbegrenzung 11 des Langlochs 5 schlägt. Das Langloch 5 ist zu seinen Öffnungsrändern 12 erweitert, in dem die Innenfläche des Langlochs 5 zu den Öffnungsrändern hin mittels Flanken abgeschrägt ist, so daß sich ein etwa trapezförmiges Profil dieser Innenfläche im Querschnitt ergibt. Die Innenfläche kann auch ein konvexes oder balliges Profil aufweisen.

Die Lageraufnahmen 9 der Flansche 8 laufen in Ringanschläge 13 aus, welche flachringförmig, parallel zur Mantelfläche des Bolzens 6 nach außen, d.h. vom Verbindungsauge 5 abgewandt vorstehen. Diese Ringanschläge 13 sind konzentrisch von weiteren Ringanschlägen 14 umgeben, die parallel zur Mantelfläche des Bolzens 6 in Richtung auf das Verbindungsauge vorstehen, und zwar von tellerförmigen, radial auswärtsstehenden Kragen 15 des Bolzens 6. Von diesen Kragen 15 ist einer fest am Bolzen 6 angeordnet, während der andere axial am Bolzen verschiebbar angeordnet ist, und über eine Vorspannmutter 16 bewegt werden kann, die auf einem Gewinde 17 des Bolzens 6 sitzt. Dadurch, daß die Ringanschläge 13 der Halterung 7 und die Ringanschläge 14 des Bolzens 6 ineinandergreifen, ist der elastische Federweg des Bolzens 6 begrenzt. Damit wird verhindert, daß die Lagerbuchsen 10 bei einer Bewegung des Bolzens 6 relativ im Langloch 5 zu stark belastet werden. Die Lagerbuchsen 10 sind nur um ein bestimmtes Maß zusammendrückbar, bis die Ringanschläge 13 und 14 aneinanderschlagen. Dieses Maß der Zusammendrückbarkeit der Lagerbuchsen 10 ist mit dem radialen Abstand der Ringanschläge 13 und 14 voneinander vorbestimmt.

Die Lagerbuchsen 10 reichen aus den Lageraufnahmen 9 bis gegen die Öffnungsränder 12 des Langlochs 5 vor. Sie liegen mit ihren dem Verbindungsauge zugewandten Stirnflächen an dem Verbindungsauge 5 als Reibschlußelemente an, so daß das Verbindungsauge 5 zwischen ihnen reibend geführt ist, wenn das Verbindungsauge 5 in Axialrichtung des Kolbenstangenendes 4 innerhalb der Halterung 7 bewegt wird. Die Reibungsfläche der Lagerbuchsen 10 ist dadurch vergrößert, daß die Lagerbuchsen 10 innerhalb des Zwischenraumens zwischen den Flanschen 8 einen größeren Außenradius aufweist, als die Lageraufnahmen 9. Mit der Vorspannmutter 16 werden die Lagerbuchsen 10 in Richtung auf das Verbindungsauge 5 vorgespannt und mit einem Preßdruck beaufschlagt, womit der Reibungswiderstand des Verbindungsauges 5 an diesen Lagerbuchsen 10 eingestellt werden kann. Dabei wirken die Krage 15 als Spannbacken.

Die in der Zeichnung dargestellte, erfindungsgemäße Gelenkverbindung 2 arbeitet folgendermaßen:

Wenn sich das Fahrerhaus des Lastkraftwagens in seiner Ruhestellung befindet, d.h. auf dem Fahrzeugrahmen des Lastkraftwagens aufliegt, ist der Kippzylinder 1 von dem Gewicht des Fahrerhauses entlastet. Der Kippzylinder 1 wird bei dieser Ruhestellung soweit eingefahren, daß sich die in der Figur gezeigte Stellung ergibt, bei der der Bolzen 6 etwa mittig durch das Verbindungsauge 5 hindurchläuft. Durch Rüttelbewegungen des Lastkraftwagens können das Karosserieelement 3, welches ein Element des Fahrerhauses oder des Fahrzeugrahmens sein kann, und der Kippzylinder 1 zu Gegenbewegung zueinander veranlaßt werden. Dabei sollen die Rüttelbewegungen des Fahrgestells des Lastkraftwagens möglichst wenig über den Kippzylinder 1 und die Gelenkverbindung 2 auf das Karosserieelement übertragen werden, sofern es sich bei den Karosserieelement 3 um ein Element des Fahrerhauses handelt. Da das Verbindungsauge 5 als Langloch ausgebildet ist, hat der Bolzen 6 innerhalb des Verbindungsauges 5 in Längsrichtung des Kippzylinders 1 einen relativ großen Bewegungsspielraum, so daß der Kippzylinder 1 und der Bolzen 6 und somit das Karosserieelement 3 weitgehend voneinander entkoppelt sind. Hierdurch wird bereits erreicht, daß Rüttelbewegungen höchstens noch vermindert vom Kippzylinder 1 auf das Karosserieelement 3 übertragen werden. Geringere Erschütterungen und Geräuschentwicklungen werden durch die elastischen Lagerbuchsen 10 gedämpft. Sollte bei einer größeren Rüttelbewegung einmal der Bolzen 6 an der Endbegrenzung 11 des Verbindungsauges 5 anschlagen, so wird auch diese Bewegung durch die Lagerbuchsen 10 gedämpft.

Soll das Fahrerhaus des Lastkraftwagens mit dem Kippzylinder 1 gekippt werden, so fährt das Kolbenstangenende 4 aus. Dabei schlägt die dem Zylinder nächstliegende Endbegrenzung 11 des Verbindungsauges 5 am Bolzen 6 an. Die dieser Endbegrenzung 11 gegenüberliegenden Bereiche der elastischen Lagerbuchsen 10 werden zusammengedrückt bis die dieser Endbegrenzung 11 benachbarten Ringanschläge 13, 14 aneinanderschlagen. Ab diesem Zeitpunkt des Aneinanderschlagens der Ringanschläge 13, 14 ist eine durchgehende metallische Anlage vom Kolbenstange 4 bis zum Karosserieteil 3 gegeben. Das Gewicht des Fahrerhauses wird also nur noch von Metall aufgefangen, der elastische Werkstoff der Lagerbuchsen wird von diesem Gewicht nicht überbeansprucht.

Durch das weitere Ausfahren der Kolbenstange wird das Fahrerhaus immer mehr angehoben. Bei einer bestimmten Ausfahrstellung des Kippzylinders erreicht das Fahrerhaus seine Totpunktlage. Wird das Fahrerhaus über diese Totpunktlage gekippt, so fällt das Fahrerhaus durch sein Eigengewicht weiter in Kipprichtung. Dadurch bewegt sich der Bolzen 6, der mit dem Fahrerhausteil (Karosserieelement 3) verbunden ist, in dem Verbindungsauge 5 von der dem Zylinder 1 nächstliegenden Endbegrenzung 11 zur anderen Endbegrenzung 11. Danach ist der Kippzylinder 1 nicht mehr druckbelastet, sondern zugbelastet. Die Fallbewegung des Fahrerhauses und gleichzeitig die Bewegung des Bolzens 6 in dem Verbindungsauge 5 wird durch die elastischen Lagerbuchsen 10 gedämpft. Die dabei auftretenden Kraftspitzen werden aufgefangen. Dabei werden die dem Zylinder 1 zugewandten Bereiche der Lagerbuchsen komprimiert, bis die dem Karosserieelement 3 zugewandten Bereiche der Ringanschläge 13, 14 aneinanderschlagen. Danach ist wieder eine durchgehende Metallanlage zwischen dem Karosserieelement 3 und dem Kippzylinder 1 hergestellt, wodurch das Gewicht des Fahrerhauses gehalten werden kann, ohne daß die Lagerbuchsen überbeansprucht werden. Außerdem wird die Bewegung des Bolzens 6 in dem Verbindungsauge 5 durch die dem Verbindungsauge zugewandten Stirnflächen der Lagerbuchsen gebremst, weil diese unter Vorspannung an dem Verbindungsauge 5 reibend anliegen.

Beim Zurückkippen des Fahrerhauses und Einfahren des Kippzylinders 1 funktioniert die erfindungsgemäße Gelenkverbindung 2 in umgekehrter Reihenfolge.

## Patentansprüche

1. Gelenkverbindung (2) zwischen dem Kippzylinder bzw. dessen Kolbenstange einerseits und dem kippbaren Fahrerhaus bzw. dem Fahrzeugrahmen eines Lastkraftwagens andererseits, welche ein zylinderseitiges Verbindungsauge (5) und einen karosserieseitigen Gelenkzapfen (6) aufweist, wobei sich der Gelenkzapfen (6) mit einem radialen Bewegungsspielraum durch das Verbindungsauge (5) erstreckt, **dadurch gekennzeichnet**, daß der Gelenkzapfen (6) an einem Karosserieteil (3) mit seinen beiden Enden in zwei elastischen Lagerbuchsen (10) elastisch bzw. federnd gehaltert ist und daß wenigstens ein Anschlag (13, 14) vorgesehen ist, der den sich elastisch veränderbaren Abstand des Gelenkzapfens (6) vom Karosserieteil (3) innerhalb eines Langlochs des Verbindungsauges (5), vorzugsweise in zwei diametralen Richtungen, begrenzt.

2. Gelenkverbindung nach Anspruch 1, dadurch gekennzeichnet, daß der Anschlag (14) metallisch ausgebildet ist.

3. Gelenkverbindung nach Anspruch 1 oder 2, dadurch gekennzeichnet, daß der Gelenkzapfen ein Bolzen (6) ist, der in einer karossierieseitigen Halterung (7) elastisch gelagert ist.

4. Gelenkverbindung nach Anspruch 3, dadurch gekennzeichnet, daß die Halterung (7) gabelförmig ausgebildet ist und Lageraufnahmen (9) für die Bolzenenden aufweist und daß in den Lageraufnahmen (9) Lagerbuchsen (10) aus elastischem Werkstoff angeordnet sind.

5. Gelenkverbindung nach Anspruch 4, dadurch gekennzeichnet, daß der Werkstoff der Lagerbuchsen (10) weich ist.

6. Gelenkverbindung nach einem oder mehreren der vorhergehenden Ansprüche, dadurch gekennzeichnet, daß der Anschlag (14) den Gelenkzapfen mit einem Abstand ringförmig umgibt.

7. Gelenkverbindung nach Anspruch 6, dadurch gekennzeichnet, daß der Anschlag (14) mit dem Gelenkzapfen verbunden ist und mit wenigstens einem korrespondierenden Anschlag (13) der Halterung (7) des Gelenkzapfens zusammenwirkt.

8. Gelenkverbindung nach Anspruch 4 und Anspruch 7, dadurch gekennzeichnet, daß der Bolzen (6) an beiden Enden Anschläge (14) aufweist, die koaxial in einem Abstand um den Bolzen (6) umlaufende, flachringförmige Bünde sind, welche von den freien Rändern radial vom Bolzen (6) vorstehender, tellerförmiger Kragen (15) parallel zur Mantelfläche des Bolzens (6) vorragen und entsprechend ausgebildete Ringanschläge (13), welche von der Halterung (7) des Bolzens (6) in Richtung auf die Kragen (15) vorragen, in einem Abstand, aufgrund größeren Durchmessers, umgreifen, wobei durch den radialen Abstand zwischen den Ringanschlägen (13, 14) der Kragen (15) und der Halterung (7) der elastische Federweg des Bolzens (6) allseitig festgelegt ist.

9. Gelenkverbindung nach Anspruch 8, dadurch gekennzeichnet, daß wenigstens einer der Kragen (15) eine lösbar am Bolzen (6) befestigte Scheibe ist.

10. Gelenkverbindung nach einem oder mehreren der vorhergehenden Ansprüche, **gekennzeichnet** **durch** wenigstens ein Reibschlußelement, an welchem das Verbindungsauge (5) bei einer Bewegung relativ radial zum Gelenkzapfen (6) gegen einen Reibungswiderstand, vorzugsweise Haft- und Gleitreibungswiderstand, gleitend geführt ist.

11. Gelenkverbindung nach Anspruch 10, **dadurch gekennzeichnet**, daß das Reibschußelement elastisch, vorzugsweise aus elastischem Werkstoff ausgebildet ist und unter Preßdruck am Verbindungsauge (5) anliegt.

12. Gelenkverbindung nach Anspruch 11, dadurch gekennzeichnet, daß zur Erzeugung des Preßdrucks eine Vorspannschraube vorgesehen ist.

13. Gelenkverbindung nach Anspruch 12, dadurch gekennzeichnet, daß beidseitig des Verbindungsauges (5) zwei Reibschlußelemente angeordnet sind, zwischen denen das Verbindungsauge (5) eingezwängt ist, daß die Reibschlußelemente als um den Gelenkzapfen umlaufende Ringe ausgebildet sind und daß der Gelenkzapfen ein Gewinde für eine Vorspannmutter (16) aufweist, mit der ein Preßdruck erzeugbar ist, welcher über zwei äußere, vorzugsweise scheibenförmige Spannbacken auf die Ringe übertragen wird.

14. Gelenkverbindung nach Anspruch 4 und 13, dadurch gekennzeichnet, daß die als Ringe ausgebildeten Reibschlußelemente integrale Bestandteile der elastischen Lagerbuchsen (10) sind.

15. Gelenkverbindung nach einem oder mehreren der vorhergehenden Ansprüche, dadurch gekennzeichnet, daß das Verbindungsauge (5) oder die andere Anlenkung des Zylinders als ein sich etwa in Längsrichtung des Kippzylinders (1) erstreckendes Langloch ausgebildet ist.

## Claims

1. An articulated connection (2) between the tilting cylinder or its piston rod on the one hand and the tiltable cab or the chassis of a lorry on the other hand, wherein the said connection has a connecting eye (5) on the cylinder side and a link pin (6) on the vehicle body side, the link pin (6 ) extending through the connecting eye (5) with a radial clearance for movement, characterised in that the link pin (6) is held in a resilient or sprung manner on a part of the bodywork (3) with the two ends of the link pin in two resilient bearing bushes (10), and at least one stop (13, 14) is provided which defines the resiliently variable distance of the link pin (6) from the body part (3) within a slot of the connecting eye (5), preferably in two diametral directions.

2. An articulated connection as claimed in claim 1, characterised in that the stop (14) is made from metal,

3. An articulated connection as claimed in claims 1 or 2, characterised in that the link pin is a bolt (6) which is resiliently supported in a mounting (7) on the bodywork side.

4. An articulated connection as claimed in claim 3, characterised in that the mounting (7) is of forked construction and has bearing receptacles (9) for the ends of the bolt , and bearing bushes (10) made from resilient material are arranged in the bearing receptacles (9).

5. An articulated connection as claimed in claim 4, characterised in that the material of the bearing bushes (10) is soft.

6. An articulated connection as claimed in one or more of the preceding claims, characterised in that the stop (14) surrounds the link pin with a clearance.

7. An articulated connection as claimed in claim 6, characterised in that the stop (14) is connected to the link pin and co-operates with at least one corresponding stop (13) on the mounting (7) of the link pin.

8. An articulated connection as claimed in claim 4 and claim 7, characterised in that the bolt (6) has at both ends stops (14), which are flanges in the shape of a flat ring coaxially surrounding the bolt (6) with a clearance and which project parallel to the surface of the bolt (6) from the free edges of the plate-like collar (15) which stands out radially from the bolt (6), and which engage with a clearance, due to their greater diameter, around ring stops (13) of corresponding construction which project from the mounting (7) of the bolt (6) in the direction of the collar (15), the resilient travel stroke of the bolt (6) being fixed all around by the radial spacing between the ring stops (13, 14) of the collar (15) and the mounting (7).

9. An articulated connection as claimed in claim 8, characterised in that at least one of the collars (15) is a disc which is releasably fixed on the bolt (6).

10. An articulated connection as claimed in one or more of the preceding claims, characterised by at least one frictional contact element on which the connecting eye (5) is slidably guided during a radial movement relative to the link pin (6) against a frictional resistance, preferably static and sliding frictional resistance.

11. An articulated connection as claimed in claim 10, characterised in that the frictional contact element is resilient, preferably made from resilient material, and rests on the connecting eye (5) under pressure.

12. An articulated connection as claimed in claim 11, characterised in that a pretensioning screw is provided in order to produce the pressure.

13. An articulated connection as claimed in claim 12, characterised in that on both sides of the connecting eye (5) two frictional contact elements are provided, between which the connecting eye (5) is forced in, the frictional contact elements are constructed as ring running round the link pin, and the link pin has a screwthread for a pretensioning nut (16) with which pressure can be produced, the pressure being transmitted to the rings by means of two outer gripping jaws which are preferably disc-shaped.

14. An articulated connection as claimed in claims 4 and 13, characterised in that the frictional contact elements constructed as rings are integral components of the resilient bearing bushes (10).

15. An articulated connection as claimed in one or more of the preceding claims, characterised in that the connecting eye (5) or other linking means of the cylinder is constructed as a slot extending approximately in the longitudinal direction of the tilting cylinder.

## Revendications

1. Joint articulé (2) entre un vérin basculant et notamment la tige de son piston, d'une part, et une cabine basculante et notamment le chassis d'un véhicule de transport, d'autre part, lequel joint présente, du côté du vérin, un oeillet de liaison (5) et, du côté de la carroserie, un tourillon articulé, le dit tourillon (6) traversant l'oeillet de liaison (5) avec un certain jeu tolérant un mouvement radial,
ce joint étant **CARACTERISE** par le fait qu'à une partie de carroserie (3), les deux extrémités du tourillon sont maintenues de manière élastique dans deux coussinets élastiques (10) et par le fait qu'est prévue au moins une butée (13, 14) qui, de préférence dans deux directions diamétrales, délimite le débattement élastique du tourillon (6) de la partie de carrosserie (3), dans une lumière allongée de l'oeillet de liaison (5).

2. Joint articulé selon la revendication 1 **caractérisé** par le fait que la butée (14) est réalisée en métal.

3. Joint articulé selon la revendication 1 ou 2 **caractérisé** par le fait que le tourillon est une tige (6) qui est, du côté carroserie, montée élastiquement dans un support (7).

4. Joint articulé selon la revendication 3 **caractérisé** par le fait que le support (7) est réalisé en forme de fourche et présente des points d'appui (9) pour les extrémités de la tige et que dans les dits points d'appui (9) sont disposés des coussinets (10) en matière élastique.

5. Joint articulé selon la revendication 4 **caractérisé** par le fait que le matériau des coussinets (10) est souple.

6. Joint articulé selon au moins l'une quelconque des revendications précédentes **caractérisé** en ce que la butée (14) entoure le tourillon à la manière d'une bague placée à une certaine distance.

7. Joint articulé selon la revendication 6 **caractérisé** par le fait que la butée (14) est reliée au tourillon et coopère avec au moins une butée correspondante (13) du support (7) du tourillon.

8. Joint articulé selon les revendications 4 et 7 **caractérisé** par le fait que, sur les deux extrémités de la tige (6), se trouvent des butées (14) qui entourent coaxialement la dite tige (6) à une certaine distance et qui font saillie sur les bords libres de collerettes (15) en forme de disques s'étendant radialement à la tige (6), parallèlement à la face latérales de la tige (6) et qui entourent à une certaine distance en raison de leur diamètre supérieur, des butées annulaires (13) de configuration appropriée qui sont saillie sur le support (7) de la tige (6) en direction des collerettes (15), tandis que la distance radiale entre les dites butées (13, 14) de la colerette (15), d'une part, et du support (7), d'autre part, définit sur tous les côtés les limites du débattement élastique de la tige (6).

9. Joint articulé selon la revendication 8 **caractérisé** par le fait qu'au moins l'une des collerettes (15) est un disque fixé de manière amovible sur la tige (6).

10. Joint articulé selon au moins l'une quelconque des revendications précédentes **caractérisé** par au moins un élément d'entraînement à friction, sur lequel, lors d'un mouvement relatif radial par rapport au tourillon (6), l'oeillet de liaison (5) est guidé de manière coulissante en opposant une résistance de frottement, de préférence une résistance de frottement par adhérence et par glissement.

11. Joint articulé selon la revendication 10 **caractérisé** par le fait que l'élément d'entraînement à friction est élastique, de préférence réalisé en un matériau élastique, et vient s'appliquer sur l'oeillet (5) sous l'effet d'une pression de serrage.

12. Joint articulé selon la revendication 11 **caractérisé** par le fait qu'une vis à tension initiale est prévue pour produire la pression de serrage.

13. Joint articulé selon la revendication 12 **caractérisé** par le fait que des deux côtés de l'oeillet (5) sont disposés deux éléments d'entraînement par friction entre lesquels l'oeillet (5) est inséré par contrainte, par le fait que les dits éléments d'entraînement par friction sont réalisés sous la forme de bagues entourant le pivot et que le dit pivot présente un filetage destiné à un écrou (16) à tension initiale qui permet de produire une pression de serrage, laquelle est transmise aux bagues par deux machoires de serrage extérieures, de préférence en forme de disques.

14. Joint articulé selon les revendications 4 et 13 **caractérisé** par le fait que les éléments d'entraînement par friction réalisés sous forme de bagues, font partie intégrante des coussinets élastiques (10).

15. Joint articulé selon au moins l'une quelconque des revendications précédentes **caractérisé** par le fait que l'oeillet (5) ou tout autre liaison du vérin est réalisé sous la forme d'un trou allongé s'étendant sensiblement en direction longitudinale du vérin basculant (1).
